# EUROPEAN PATENT SPECIFICATION

(11) **EP 1 617 737 B1**
(45) Date of publication and mention of the grant of the patent: **30.07.2008**
(21) Application number: 03775777.0
(22) Date of filing: 20.10.2003
(51) Int. Cl.: A23L 2/70, A23L 2/72, A23L 1/212

(54) **A METHOD FOR VARYING THE VISCOSITY OF VEGETABLE OR FRUIT JUICES**
VERFAHREN ZUR VISKOSITÄTSÄNDERUNG VON FRUCHT- ODER OBSTSÄFTEN
PROCEDE PERMETTANT DE FAIRE VARIER LA VISCOSITE DE JUS DE FRUITS OU DE LEGUMES

(30) Priority: 18.04.2003 IT PR20030030
(43) Date of publication of application: 25.01.2006
(73) Proprietor: CFT S.p.A., 43100 Parma (IT)
(72) Inventor: PACIELLO, Gerardo, I-43100 Parma (IT); GELATI, Christian, I-43100 Parma (IT)
(74) Representative: Gotra, Stefano
(86) International application number: PCT/IT2003/000645
(87) International publication number: WO 2004/091319

(56) References cited:
- EP-A- 0 414 964
- WO-A-91/03172
- WO-A-92/03939
- WO-A-03/024243
- GB-A- 1 379 517
- US-A- 3 657 424
- US-A- 4 828 865
- US-A- 5 073 397
- US-A- 5 108 774
- US-A- 5 260 086

## Description

### TECHNICAL FIELD AND BACKGROUND ART.

The present invention relates to a method for varying the viscosity of vegetable or fruit juices, of the type comprising the steps of:
- feeding a triturated product to at least a refining stage, to obtain a juice;
- refining the product and obtaining the juice;
- dividing a flow rate of juice exiting the refining stage into a primary flow rate and a secondary flow rate;
- feeding the primary flow rate of juice to a decanting stage to obtain a fibrous fraction and a serous, or clarified, fraction;
- feeding the fibrous fraction to a mixing stage;
- feeding the secondary flow rate of juice to said mixing stage;
- mixing the serous fraction with the secondary flow rate of juice to obtain a so-called enriched juice.

In accordance with the prior art, refining takes place with the use of one or more mashing machines, within which the product, normally already triturated, is heated to a pre-set temperature to obtain a juice.

Subsequently, the juice undergoes a heat treatment which, depending on the temperature used, is distinguished into "cold break" heat treatment, performed at about 65°C, and "hot break" heat treatment, performed at about 95°C.

Currently, the viscosity of a juice is mainly controlled by varying the temperature whereat the heat treatment is performed.

The viscosity of a juice is strongly influenced by the content of pectic material naturally present in vegetables and fruit.

A high percentage of pectic material (particularly the material in the form of long polymeric chains) confers a high value of viscosity to the product.

The natural breakage of the cell walls causes the liberation of pectolytic enzymes whose function is to demolish the polymeric chains and hence reduce viscosity.

In this process, the heat treatment plays an important role, since temperature has a decisive influence on enzymatic activation/inactivation phenomena.

If heating occurs at values below 65°C, the enzymes are not inactivated and therefore they can act to demolish the polymeric chains, giving rise to a product (called Cold Break, because it is obtained through a cold break heat treatment) with low viscosity (i.e. with a high Bostwick degree), having a Bostwick degree that exceeds 7 cm.

Vice versa, heating to 95°C completely inactivates the enzymes, which therefore do not intervene to demolish the polymeric chains, giving rise to a high viscosity product (called Hot Break, because it is obtained through a hot break heat treatment) with a Bostwick degree of less than 5 cm.

Other known ways to control the viscosity of a juice consist of increasing the degree of concentration, i.e. the sugar level, of the juice, or to add processing by-products into the juice, such as seeds, stalks and peels, appropriately sterilised and purified.

The latter solution has the important drawback of being usable only to reduce the viscosity of the juice and not also to increase it.

Moreover, the installations that exploit this method to control viscosity require constant manual interventions, since there currently is no direct control of viscosity which allows an automatic regulation of the operating parameters of the method which influence the value of viscosity.

Another disadvantage of such a method resides in the fact that the by-products, though they are sterilised and purified, negatively influence the organoleptic characteristics of the juice, introducing aftertastes and unpleasant flavours.

WO-A-03024243 discloses a method for the preparation of concentrated food products.

### DISCLOSURE OF INVENTION.

An object of the present invention is to eliminate the aforesaid drawbacks making available a method for varying the viscosity of vegetable juices or of fruit, which allows to obtain juices having viscosity values that are largely independent of the degree of sugar concentration of the juice, of the quality of the product and of any heat treatment performed.

Another object of the present invention is to propose a method to vary the viscosity of vegetable juices or of fruit which does not require manual interventions to vary the operating parameters which influence the final viscosity value of the juice.

A further object of the present invention is to make available a method able to vary the viscosity of vegetable or fruit juices, without adding by-products.

Yet another object is to obtain the results set out above, within the context of a simple, rational and reliable method.

Said aims are fully achieved by the method for varying the viscosity of vegetable or fruit juices of the present invention, which is characterised by the contents of the claims set out below and in particular in that it comprises a step of measuring the viscosity of the enriched juice to control and manage operative parameters of the method which influence the viscosity itself:

### BRIEF DESCRIPTION OF DRAWINGS.

This and other features shall become more readily apparent from the following description of a preferred embodiment illustrated, purely by way of non limiting example, in the accompanying drawing tables, in which:

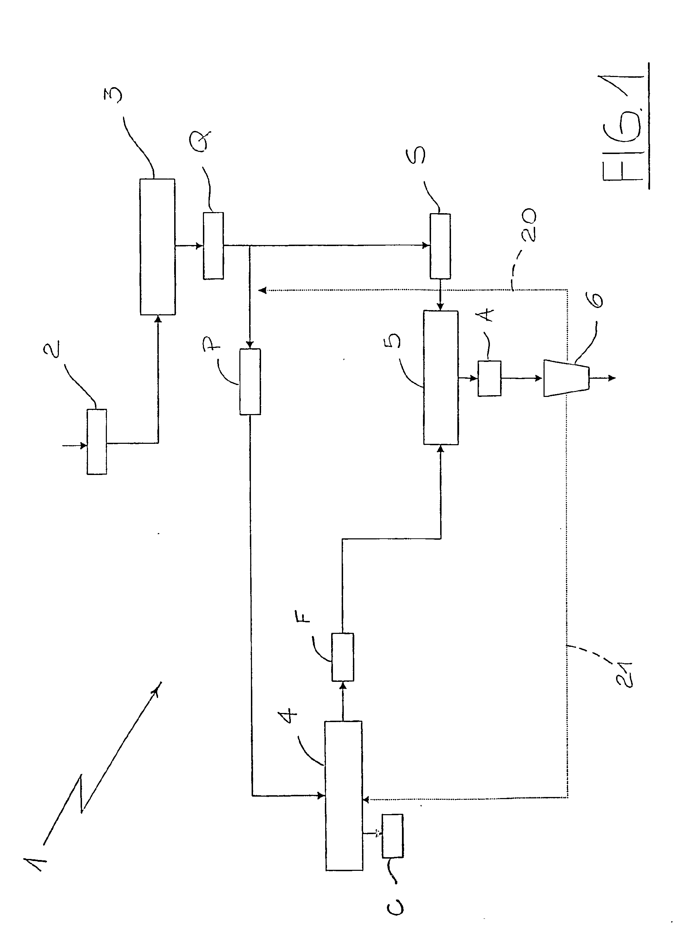

- Figure 1 shows a schematic view of a method for varying the viscosity of vegetable or fruit juices, in accordance with the present invention;
- Figure 2 shows a lateral sectioned view of a decanter associated with the decanting stage.

### BEST MODE FOR CARRYING OUT THE INVENTION.

With reference to the figure, the subject method is globally designated by the number 1 and comprises a step of feeding a triturated product to at least a refining stage 2, in order to obtain a juice. In the illustrated example, refining 2 preferably takes place in a single stage by means of a known mashing machine, not described herein.

In the preferred embodiment, the juice obtained from the refining stage 2 is collected within a tank, schematically designated by the number 3, but it could also be sent directly to subsequent treatment stations.

From the tank 3 is drawn a flow rate Q of juice which, immediately downstream of the tank itself, is divided into a primary flow rate P and a secondary flow rate S.

The primary flow rate P is fed to a decanting stage 4, typically provided with a decanter 50 having a drum 51 and an advancing Archimedes' screw 52, in order to obtain a fibrous fraction F and a serous or clarified fraction C.

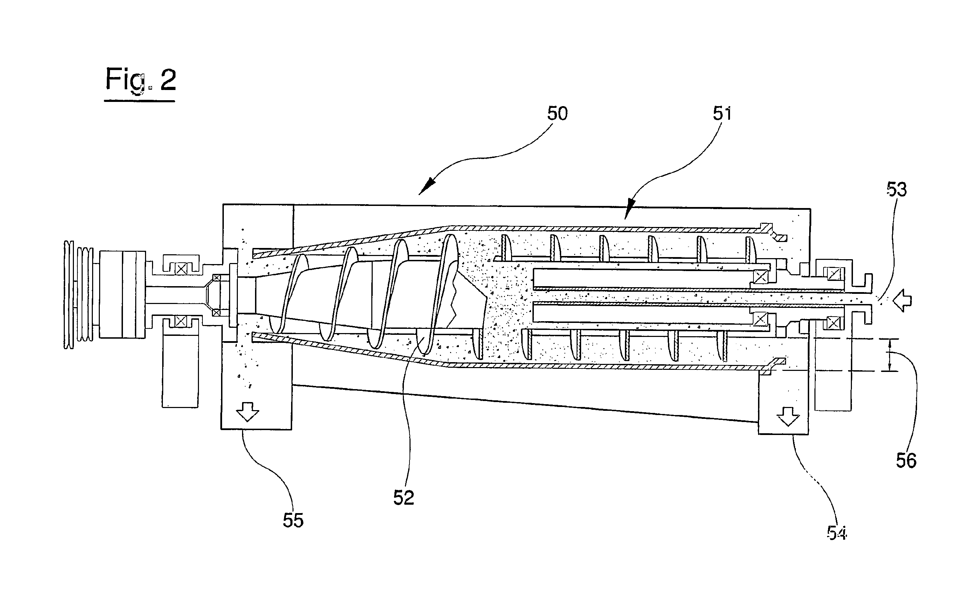

With particular reference to Figure 2, the decanter 50 is provided with an inlet 53 for the primary flow rate P and with two outlets 54, 55, respectively for the clarified fraction C and for the fibrous fraction F. In particular, the number 55 designates the suction height of the clarified fraction C and/or of the fibrous fraction F inside the decanter 50.

The fibrous fraction F is subsequently fed to a mixing stage 5, in which it is mixed with the secondary flow rate S of juice drawn from the collecting tank 3. In the preferred embodiment, the mixing stage 5 comprises at least a dynamic mixer, known and hence not described herein.

The mixing of the fibrous fraction F with the juice obtained by refining leads to obtain a so-called enriched juice, designated by the letter A in the figure.

The method is characterised in that it comprises a step 6 of measuring the viscosity of the enriched juice A to control and manage operative parameters of the method which influence the viscosity of the juice.

In the illustrated example, viscosity is measured by measuring a head loss between two areas of a conduit within which flows enriched juice A. The head loss may be of the concentrated kind, for instance localised on a bottleneck, or distributed along the walls of the conduit.

In an alternative embodiment, viscosity can be measured by means of a viscometer.

The measurement of the head loss in the conduit (being a function of viscosity) is used to control simultaneously or in mutually alternative fashion, some operative parameters of the method.

With reference to the figure, the pressure difference in the conduit is used to control the primary flow rate P of juice as indicated by the arrow designated by the number 20. In particular, to increase viscosity it is necessary to increase the primary flow rate of juice.

The measurement of the pressure difference (and hence of viscosity) within the conduit can also be used to control and vary the rotating speed of the Archimedes' screw 52 and/or of the drum 51 present inside the decanter 50, as indicated by the arrow designated by the number 21 in the figure. Specifically, by increasing the rotating speed of the Archimedes' screw or of the drum, an increase of the viscosity of the enriched juice A flowing out of the mixed is obtained.

An additional operative parameter controllable as a function of head loss (and hence of viscosity) is the suction height 55, inside the decanter 50, of the fibrous fraction F and/or of the serous fraction C to be sent to the subsequent treatment stations. In particular, the lower the suction height, the greater the viscosity of the enriched juice A flowing out of the mixing step 5.

The invention achieves important advantages.

First of all, such a method allows to obtain fruit or vegetable juices, in particular tomato juices, whose viscosity values are largely independent of the degree of sugar concentration.

In the second place, the subject method does not require any manual interventions to vary the operative parameters that influence the final value of viscosity of the juice, but automatically intervenes according to the value of viscosity of the final juice.

Another advantage of the present invention is that such a method allows to vary the viscosity of vegetable or fruit juices without adding by-products, and therefore preserving the organoleptic characteristics and the flavour of the juice.

## Claims

1. A method (1) for varying the viscosity of fruit or vegetable juices, comprising the steps of:
feeding a triturated product to at least a refining stage (2), to obtain a juice;
refining (2) the product and obtaining the juice;
dividing a flow rate (Q) of juice exiting the refining stage into a primary flow rate (P) and a secondary flow rate (S);
feeding the primary flow rate (P) of juice to a decanting stage (4) to obtain a fibrous fraction (F) and a serous, or clarified, fraction (C);
feeding the fibrous fraction (F) to a mixing stage (5);
feeding the secondary flow rate of juice (S) to said mixing stage (5);
mixing the fibrous fraction (F) with the secondary flow rate of juice to obtain a so-called enriched juice (A),
**characterised in that** it comprises a step (6) of measuring the viscosity of the enriched juice (A) to control and manage operative parameters of the method which influence the viscosity itself.

2. A method as claimed in claim 1, **characterised in that** the step (6) of measuring viscosity is performed by means of a viscometer.

3. A method as claimed in claim 1, **characterised in that** the step (6) of measuring viscosity is performed by measuring a head loss between two areas of a conduit within which flows enriched juice (A).

4. A method as claimed in claim 1, **characterised in that** the operative parameters comprise at least the primary flow rate (P) of juice.

5. A method as claimed in claim 1, **characterised in that** the decanting stage (4) comprises at least a decanter (50).

6. A method as claimed in claim 5, **characterised in that** the operative parameters comprise at least a rotating speed of an Archimedes' screw (52) present inside the decanter (50) and/or a rotating speed of a drum (S1) of the decanter (50).

7. A method as claimed in claim 5, **characterised in that** the operative parameters comprise at least a suction height (55) of the fibrous fraction (F) and/or of the serous fraction (C) inside the decanter (50).

8. A method as claimed in claim 1, **characterised in that** the mixing stage (5) comprises at least a dynamic mixer.

9. An installation for processing vegetable and/or fruit juices,
**characterised in that** it implements a method as claimed in any of the previous claims.

## Patentansprüche

1. Verfahren (1) zur Viskositätsänderung von Frucht- oder Gemüsesäften umfassend folgende Schritte:
Zuführung eines zerkleinerten Produktes zu mindestens einer Raffinationsstufe (2) zur Erzielung eines Saftes;
Raffination (2) des Produktes und Erzielen des Saftes;
Aufteilung eines Saftvolumenstroms (Q), der die Raffinationsstufe verlässt, in einen Hauptvolumenstrom (P) und einen Nebenvolumenstrom (S) ;
Zuführung des Safthauptvolumenstroms (P) zu einer Dekantierstufe (4) zur Erzielung einer Faserfraktion (F) und einer Serumfraktion bzw. einer geklärten Fraktion (C),
Zuführung der Faserfraktion (F) zu einer Mischstufe(5);
Zuführung des Saftnebenvolumenstroms (S) zu der genannten Mischstufe (5);
Mischung der Faserfraktion (F) mit dem Saftnebenvolumenstrom zur Erzielung eines sogenannten angereicherten Saftes (A),
**dadurch gekennzeichnet, dass** das Verfahren einen Schritt (6) zum Messen der Viskosität des angereicherten Saftes (A) umfasst, um die die Viskosität beeinflussenden Betriebsparameter des Verfahrens zu steuern und zu regeln.

2. Verfahren nach Anspruch 1, **dadurch gekennzeichnet, dass** der Schritt (6) zum Messen der Viskosität mithilfe eines Viskometers erfolgt.

3. Verfahren nach Anspruch 1, **dadurch gekennzeichnet, dass** der Schritt (6) zum Messen der Viskosität durch Erfassen eines Lastgefälles zwischen zwei Bereichen einer Leitung erfolgt, in dem ein angereicherter Saftstrom (A) fliesst.

4. Verfahren nach Anspruch 1, **dadurch gekennzeichnet, dass** die Betriebsparameter zumindest den Safthauptvolumenstrom (P) umfassen.

5. Verfahren nach Anspruch 1, **dadurch gekennzeichnet, dass** die Dekantierstufe (4) zumindest einen Dekanter (50) umfasst.

6. Verfahren nach Anspruch 5, **dadurch gekennzeichnet, dass** die Betriebsparameter zumindest eine Drehgeschwindigkeit einer in dem Dekanter (50) vorgesehenen Förderschnecke (52) bzw. die Drehgeschwindigkeit einer Trommel (51) des Dekanters (50) umfassen.

7. Verfahren nach Anspruch 5, **dadurch gekennzeichnet, dass** die Betriebsparameter zumindest eine Saughöhe (55) der Faserfraktion (F) und/oder der Serumfraktion (C) im Inneren des Dekanters (50) umfassen.

8. Verfahren nach Anspruch 1, **dadurch gekennzeichnet, dass** die Mischstufe (5) zumindest einen dynamischen Mixer umfasst.

9. Anlage zum Verarbeiten von Frucht- oder Gemüsesäften, **dadurch gekennzeichnet, dass** ein Verfahren nach einem der vorhergehenden Ansprüche zur Anwendung kommt.

## Revendications

1. Procédé permettant de faire varier la viscosité de jus de fruits ou de légumes, comprenant les phases de:
alimentation d'un produit trituré vers au moins une opération de raffinage (2), pour obtenir un jus;
raffinage du produit et obtention du jus;
division d'un débit (Q) de jus sortant de l'opération de raffinage en un débit primaire (P) et un débit secondaire (S);
alimentation du débit primaire (P) de jus vers une opération de décantation (4) pour obtenir une fraction fibreuse (F) et une fraction séreuse, ou clarifiée, (C); alimentation de la fraction fibreuse (F) vers une opération de mixage (5);
alimentation du débit secondaire de jus (S) vers ladite opération de mixage (5);
mixage de la fraction fibreuse (F) avec le débit secondaire de jus pour obtenir un jus dit enrichi (A),
**caractérisé en ce qu'**il comprend une phase (6) de mesure de la viscosité du jus enrichi (A) pour contrôler et gérer les paramètres opérationnels du procédé qui influence la viscosité elle-même.

2. Procédé selon la revendication 1, **caractérisé en ce que** la phase (6) de mesure de la viscosité est réalisée au moyen d'un viscosimètre.

3. Procédé selon la revendication 1, **caractérisé en ce que** la phase (6) de mesure de la viscosité est réalisée en mesurant une perte de charge entre deux zones d'un conduit à l'intérieur duquel s'écoule le jus enrichi (A).

4. Procédé selon la revendication 1, **caractérisé en ce que** les paramètres opérationnels comprennent au moins le débit primaire (P) de jus.

5. Procédé selon la revendication 1, **caractérisé en ce que** l'opération de décantation (4) comprend au moins un décanteur (50).

6. Procédé selon la revendication 5, **caractérisé en ce que** les paramètres opérationnels comprennent au moins une vitesse de rotation d'une vis d'Archimède (52) présente à l'intérieur d'un décanteur (50) et/ou une vitesse de rotation d'un tambour (51) du décanteur (50).

7. Procédé selon la revendication 5, **caractérisé en ce que** les paramètres opérationnels comprennent au moins une hauteur d'aspiration (55) de la fraction fibreuse (F) et/ou de la fraction séreuse (C) à l'intérieur du décanteur (50).

8. Procédé selon la revendication 1, **caractérisé en ce que** l'opération de mixage (5) comprend au moins un mélangeur dynamique.

9. Installation de traitement de jus de fruits ou de légumes, **caractérisée en ce qu'**elle emploie un procédé selon n'importe laquelle des revendications précédentes.
